Europäisches Patentamt

(19) European Patent Office

Office européen des brevets

(11) Publication number: **0 139 352**
**B1**

(12) **EUROPEAN PATENT SPECIFICATION**

(45) Date of publication of patent specification: **14.10.87**

(21) Application number: **84304907.3**

(22) Date of filing: **18.07.84**

(51) Int. Cl.⁴: **B 01 D 53/34**

(54) **Treatment of flue gas.**

(30) Priority: **29.07.83 DK 3484/83**

(43) Date of publication of application:
**02.05.85 Bulletin 85/18**

(45) Publication of the grant of the patent:
**14.10.87 Bulletin 87/42**

(84) Designated Contracting States:
**DE FR GB NL SE**

(56) References cited:
**EP-A-0 021 558**
**EP-A-0 074 258**
**DE-A-2 225 686**
**DE-A-2 518 079**
**DE-A-2 553 675**
**DE-A-2 810 473**
**DE-A-3 034 896**
**DE-U-7 716 772**
**GB-A-2 021 086**
**US-A-3 932 587**
**US-A-4 304 550**

(73) Proprietor: **F.L. Smidth & Co. A/S**
**77 Vigerslev Alle**
**DK-2500 Valby Copenhagen (DK)**

(72) Inventor: **Bhatia, Vinay Kumar**
**c/o 77 Vigerslev Alle**
**DK-2500 Valby Copenhagen (DK)**

(74) Representative: **Jackson, Peter Arthur et al**
**GILL JENNINGS & EVERY 53-64 Chancery Lane**
**London WC2A 1HN (GB)**

Courier Press, Leamington Spa, England.

**0 139 352**

### Description

The present invention relates to a semi-dry method, hereinafter referred to as of the kind described, of removing an acid gas, particularly including oxide(s) of sulphur from hot flue gas, wherein an absorption agent and liquid water are introduced and dispersed in a stream of the hot flue gas in a reaction zone in a tubular reaction chamber having a central vertical axis, whereby the acid gas is absorbed by and reacts with the absorption agent in the presence of evaporating liquid water to produce a dry powder comprising reaction products and unreacted absorption agent suspended in the flue gas, whereafter the powder is separated from the flue gas in a separate separating zone. The invention relates also to an apparatus for carrying out this method.

The term "dry powder" as used in the present specification is intended to indicate a non-sticky easy flowing powder containing 0—15%, preferably 5—10%, by weight of water.

Various processes for removing sulphur oxides and other acid gases from flue gas from, e.g., power plants and incinerators are known.

A review of such processes is given in US—A—4197278.

Most of these fall within one of the following main groups:

i) Wet methods comprising scrubbing the flue gas with suspensions or solutions of hydroxides or carbonates of alkali or alkaline-earth metals wherein the reaction products are withdrawn as a sludge.

The main advantages of the wet methods are: high sulphur oxide removal even at high sulphur oxide concentrations in the hot flue gas and high absorbent utilization. The main disadvantages are: undesirable end products occurring as a sludge presenting serious disposal problems and water saturated exit gas which must be heated prior to discharge to the atmosphere. Furthermore, clogging and corrosion in the scrubber lead to operational difficulties and unavailability of wet scrubbers.

ii) Dry methods wherein the flue gas is brought into contact and reacted with dry absorption agents and wherein the reaction products are withdrawn as a dry powder.

The main advantages of the dry methods are: elimination of clogging risks, dry solid end products and an exit gas which can be easily discharged to the atmosphere. However, since the gas solid reactions are relatively slow, the sulphur oxide removal and absorbent utilization are low.

iii) The semi-dry methods wherein the flue gas is brought into contact with aqueous suspensions or solutions of hydroxides or carbonates of alkali or alkaline-earth metals under such conditions that the water is evaporated and the reaction products are withdrawn as a dry powder.

The semi-dry methods provide highly improved sulphur oxide removal and absorbent utilization compared to the dry methods, although in general not as high as may be obtained by the wet methods, easily dischargeable desulphurized flue gas, and a dry, fluent solid powder as end product.

Semi-dry methods of the kind described are disclosed in a number of patents and patent applications:

US—A—3932587 describes $SO_2$ removal by treating a hot flue gas with an aqueous alkali metal carbonate and/or bicarbonate solution or slurry in a spray-dryer after fly ash has been removed from the hot flue gas.

GB—A—2021086 describes a similar process utilizing a less expensive absorption agent: $Ca(OH)_2$ suspended in water. Improved lime utilization is achieved by avoiding fly ash removal from the hot inlet gas and by recirculation of a part of the powdery end product from the spray-dryer to the aqueous slurry directed to the spray-dryer. The viscosity of the aqueous slurry of absorption agent and recirculated powder, however, puts narrow limits to the amount of powder recirculated.

In order to overcome this disadvantage it is suggested in Danish Patent Application No. 3959/79 (and DE—A—3034896) to recirculate the powder by blowing the dry powder directly into the spray-dryer.

It is known that a key parameter determining the operating conditions of semi-dry methods is AST, i.e., "approach to saturation temperature", defined as reaction zone exit gas temperature minus gas saturation temperature, and that sulphur oxide removal in a spray-dryer as well as in an associated fabric filter increases dramatically when AST tends to zero.

It is, however, impractical to operate a spray-dryer at low AST values because the risk of "wet bottom", i.e. accumulations of moist or wet product on the walls and the bottom of the spray-dryer, increases with decreasing AST. Such accumulations are highly undesirable because they lead to troublesome handling and discharge of solid material precipitated in the spray-dryer. Low AST values are also undesirable because they will lead to inoperable conditions in an associated bag filter.

Another problem when developing suitable semi-dry flue gas desulphurization methods consists in providing a method with sufficient turn-down ratio to cope with the varying flue gas rate characteristic of power plants.

Although great efforts have been devoted to developing semi-dry flue gas desulphurization methods employing spray-dryers, and although such methods have been realized on an industrial scale there is a need for an effective, commercially feasible method and a simpler compact apparatus for removing sulphur oxides and other acid gases from flue gas, in particular from flue gas produced in power plants and incinerators, providing adequate sulphur oxide removal and efficient utilization of absorption agent at varying flue gas loads.

It has now been found that it is possible to perform a method of the kind described allowing large concentrations of suspended material in the reaction zone and providing a radically increased gas solid

2

contact, resulting in adequate sulphur oxide removal and efficient utilization of absorption agent at varying flue gas loads without risk of the wet bottom phenomena of spray dryers, and which can be worked in a compact apparatus of uncomplicated design.

This is achieved by a method of the kind described which, according to the invention, is characterized by introducing, dispersing and suspending the absorption agent and the water in a rising swirling stream of the hot flue gas at the lower part of the reaction zone, introducing at least a part of the hot flue gas axially at the bottom of the reaction zone as a stream which is subjected to a rapid reduction in axial velocity at the lower part of the reaction zone; the swirling flow of the hot flue gas being provided by bringing the gas into rotation before it is introduced axially into the reaction zone, or by introducing a second stream of the hot flue gas tangentially at one or several positions at the lower part of the reaction zone; and removing the resulting dry powder from the upper part of the reaction zone suspended in and entrained by the flue gas.

This method provides an extremely intimate gas solid contact due to interplay between centrifugal forces, gravity forces and frictional forces between gas and suspended material.

Interplay between gravity forces and frictional forces results in axial transport of suspended material, whereas interplay between centrifugal forces and frictional forces leads to precipitation in the reaction chamber. Interplay between these two mechanisms may give rise to any desired internal recirculation rate of the material in the reaction chamber. It is therefore possible to maintain desired particle hold-up in the reaction zone providing efficient treatment at both high and low flue gas load, since the method according to the invention at high flue gas loads is operated with more intensive swirl, resulting in a higher internal recirculation rate of material in the reaction zone.

Moreover, the above described movement of gas and suspended material leads to high relative velocities between gas and suspended material, leading to reduction of the gas phase diffusion resistance.

The new method allows a significantly higher concentration of suspended material in the reaction zone than that achieved by methods operating with a descending or horizontal co-current gas particle flow, e.g. by the known spray-dryer methods.

Furthermore, the large hold-up and high recirculation rate of material in the reaction zone provides a reduced risk of disturbances due to too low AST values.

The temperature of the hot flue gas introduced into the reaction zone is in general above 120°C. When the hot flue gas is flue gas from a power plant, the temperature is in general within the range 110—250, typically 140—180°C.

If desired fly ash may be removed totally or partially from the hot flue gas before it is introduced into the reaction zone.

The axial velocity of the hot flue gas introduced at the bottom of the reaction zone may vary depending on load and size of the particles circulating in the reaction zone. However, it must be sufficiently high to maintain particle hold-up in the reaction zone and to prevent particle fall-out from the bottom of the zone.

The reduced velocity of the flue gas must be sufficiently high to ensure transport of the particles out of the upper part of the reaction zone, but sufficiently low to enable proper material build-up in the reaction zone, taking into consideration that increasing swirl movement results in increasing internal recirculation, i.e. increasing material hold-up.

Preferably, the axial velocity of the hot axially introduced stream of flue gas is within the range 10—60 m/sec, most preferably 25—45 m/sec, while the axial velocity of the rising swirling stream of hot flue gas in the middle of the reaction zone is within the range 2—20 m/sec, most preferably 3—6 m/sec, and while the reduction in axial velocity at the lower part of the reaction zone corresponds to a velocity ratio $v_{initial}/v_{reduced}$ within the range 3—20, preferably 4—9.

The rapid reduction in axial velocity preferably takes place during a period of time within the range 0.05—0.2 times the gas retention time in the reaction zone, e.g. by directing the hot flue gas through a divergent annular frustoconical bottom part of the reaction zone, in particular having an apex angle greater than 12°, preferably within the range 12—120°, in particular 40—90°. Apex angles greater than 120° are not desirable because of risk of undesirable material build-up on the frustoconical bottom of the reaction zone.

When it is desired to remove fly ash from the hot flue gas before it is introduced into the reaction zone, and when the swirl movement is provided by passing the gas stream through a swirl-inducing zone before it is introduced axially at the bottom of the reaction zone, the swirl-inducing zone may comprise a vertical cyclone arranged directly below the reaction zone, the cyclone functioning as both fly ash precipitator and swirl-inducer.

The arrangement comprising tangential introduction of a second stream of hot flue gas is particularly advantageous because the tangentially introduced hot gas will lead to formation of a layer of hot gas circulating along the walls of the tubular reaction zone. This layer has an AST value higher than the AST value in the central part of the reaction zone and hereby the risks of operating with low AST values in the reaction zone, i.e. the risks of formation of deposits of material on the walls and blocking the reaction zone, are reduced.

The absorption agent is preferably selected from the group comprising oxides and hydroxides of calcium and magnesium, and oxides, hydroxides and carbonates of alkali metals. For economic reasons $Ca(OH)_2$, preferentially slaked in a detention slaker, attrition slaker or ball mill, is the preferred absorption agent.

The absorption agent may be introduced as a dry powder or suspended or dissolved in water.

In order to achieve a high absorption agent utilization, the absorption agent is preferably introduced suspended or dissolved in water, but also in this case it is possible, if desired, to introduce additional water.

The water or the suspension or solution of absorption agent in water is preferably introduced in the reaction zone at a position where the flue gas velocity is high. Preferred operating conditions are characterized in that the gas retention time in the reaction zone is within the range 1—5 seconds, preferably 2—3 seconds, and that the material retention time in the reaction chamber is within the range 1—8 minutes, preferably 3—5 minutes, where the material retention time $t_M$ is defined as

$$t_M = H_M/W_M,$$

where $H_M$ is the material hold-up in the reaction zone (kg), and $W_M$ is the material input (kg/min.) of fresh absorption agent plus solid particles present in the hot flue gas.

As mentioned above the powder comprises reaction products and unreacted absorption agent. However, the flue gas entering the reaction zone will in general entrain fly ash particles which will be precipitated in the separating zone. Fly ash may contain reactive alkalis capable of reacting with sulphur oxides and other acid gases under proper conditions, resulting in a reduced demand for absorption agent.

A part of the powder precipitated in the separating zone may be recirculated to the reaction zone. When operating with this external powder recirculation, the external powder recirculation rate may be equal to 10—70 times, preferably 15—30 times, the input rate of absorption agent and solid particles present in the hot flue gas, where input rate of absorption agent is defined as input rate of fresh absorption agent not comprising unreacted absorption agent introduced with the powder.

When the method is operated at high flue gas loads high intensive swirl is generated giving rise to particle build-up due to high internal recirculation of material in the reaction zone necessitating only a moderate external recirculation, if any. Whereas at low flue gas load the method is operated with less intensive swirl necessitating a higher external recirculation in order to provide a desired particle hold-up in the reaction zone.

The average particle diameter of the externally recirculated powder is preferably within the range 50—250 µm. This preferred size may be ensured by subjecting the dry powder separated in the separating zone to size adjustment, e.g. screening, or size reduction by comminution, e.g. in a hammer mill, before it is transferred to the reaction zone.

Proper AST values are obtained when water is introduced into the reaction zone in an amount corresponding to 50—100% of the amount needed to cool the flue gas to the adiabatic saturation temperature. AST falls in general in the range 0—40°C, preferably in the range 5—20°C, in particular within the range 8—16°C.

The water may be introduced totally or partially as a mixture of water and absorption agent.

If desired, e.g. when operating with very low AST, the exit gas may be reheated, e.g. by by-passing a portion of the hot flue gas around the reaction zone.

After leaving the reaction zone, the flue gas is dedusted, whereby powder comprising unreacted absorption agent, reaction products and fly ash are removed in the separating zone in one or two steps in separators known per se.

The separating zone may comprise two subzones, a first subzone for precipitation of coarse particles and a second subzone for precipitation of fine particles.

The invention also includes an apparatus for carrying out the method, the apparatus being characterized in comprising a tubular reaction chamber having a central vertical axis, an annular bottom wall which slopes downwardly and inwardly with an apex angle greater than 12°; an inlet for hot flue gas comprising a gas inlet opening arranged centrally in the bottom wall and means in the form of a tangentially arranged gas inlet at the lower part of the chamber, or a swirl chamber below the gas inlet opening at the bottom of the chamber, for giving the flue gas a swirling movement, at least one duct for feeding absorption agent and water into the lower part of the reaction chamber, and a suspension outlet at the top of the reaction chamber connected to a particle precipitator having a powder outlet and a gas outlet.

The extremely intimate gas solid contact and the high concentration of solid material in the reaction zone permit the use of a very compact apparatus of simple design and corresponding low investment costs.

Preferably the apex angle of the annular bottom wall is within the range 12—120°, in particular 40—90°, and the ratio $A_{upper}/A_{lower}$ between the areas of the upper and lower part of the annular bottom wall is within the range 3—20, preferably 4—9.

The absorption agent may be introduced into the reaction chamber suspended or dissolved in water. In this case water and absorption agent are fed through the same feeding duct.

The feeding duct for the water and absorption agent is preferably provided with a venturi injection nozzle.

When it is desired to operate the apparatus with an external powder recirculation, the tubular reaction chamber may be provided with a powder inlet duct arranged at the lower part of the tubular reaction chamber and connected to the powder outlet of the particle precipitator.

The apparatus may be provided with means subjecting the dry powder withdrawn from the particle precipitator to size adjustment or comminution before it is recirculated to the reaction zone.

Any known type of particle precipitator may be used.

4

**0 139 352**

According to one arrangement, the particle precipitator comprises a coarse separator, e.g. a cyclone separator, arranged upstream of a fine separator, e.g. an electrostatic filter or a fabric filter.

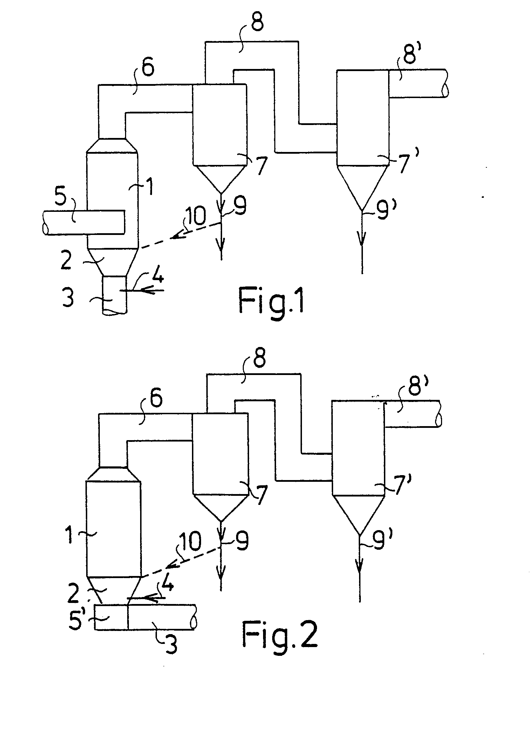

The invention will now be further described with reference to the accompanying drawings, in which Figures 1 and 2 show diagrammatically examples of an apparatus according to the invention.

Referring to the Figures, the apparatus comprises a tubular reaction chamber 1 provided with an annular bottom wall 2, an inlet duct 3 for hot flue gas, an inlet duct 4 for absorption agent suspended or dissolved in water, and means for giving the flue gas a tangential velocity component comprising a gas inlet duct 5 tangentially arranged at the lower part of the tubular reaction chamber shown in Figure 1 and a swirl chamber 5' shown in Figure 2. The top of the reaction chamber is, via a duct 6, connected to a particle precipitator comprising a separating cyclone 7 with material outlet 9. The exit gas from the separating cyclone 7 is via a gas outlet duct 8, directed to an electrostatic filter 7' with a material outlet 9' and a gas outlet duct 8'. The fine powder precipitated in the particle precipitator is discharged as waste product. However, a part of this powder may be recirculated to the reaction chamber via a powder transfer duct 10.

If desired, the inlet duct 4 may be replaced by two ducts, one for water and another for absorption agent.

Example

Tests were carried out in a pilot plant with a capacity corresponding to a 2.5 MW power plant. The lay-out of the pilot plant was as illustrated in Figure 1 with a bag filter instead of the electrostatic filter 7'. The dimensions of the reaction chamber were: height of cylindrical part: 7000 mm; diameter; 900 mm; apex angle: 60°.

Instead of hot flue gas, hot humified air containing $SO_2$ was used. The $SO_2$ concentration was set by injecting bottled $SO_2$ in a stream of hot humified air. An aqueous slurry of calcium hydroxide as absorption agent was injected into the reaction chamber via a two-phase air liquid spray nozzle located axially in the central gas inlet opening to the reaction chamber.

To measure the performance of the system the $SO_2$ concentrations at the gas inlet and outlet of the reaction chamber were measured by UV spectrophotometric $SO_2$ analyses (H&B-RADASIG). Proper care was taken for measuring $SO_2$ concentration in humid and dusty environment, especially at the reaction chamber outlet. The $SO_2$ concentrations at the outlet of the fabric filter were monitored by a Dupont UV $SO_2$ analysis.

Chemical and physical properties of the calcium hydroxide appear from Table I.

Operating conditions and test results are presented in Table II.

Excellent $SO_2$ removal was obtained, and even when operating with very low AST values no "wet bottom" problems were observed.

TABLE I

| Chemical analysis: | | % by weight |
|---|---|---|
| Calcium oxide | (CaO) | 73.0 |
| Magnesium oxide | (MgO) | 0.7 |
| Silicon oxide | $(SiO_2)$ | 0.60 |
| Aluminium oxide | $(Al_2O_3)$ | 0.25 |
| Iron oxide | $(Fe_2O_3)$ | 0.20 |
| Phosphorus pentaoxide | $(P_2O_5)$ | 0.05 |
| Sulphur | (S) | 0.04 |
| Carbon dioxide | $(CO_2)$ | 0.70 |
| Loss on ignition (at 580°C) | 24.00 | |
| Physical properties: | | |
| Sieve analysis: | | |
| Residue on a 0.2 mm sieve | | 0.3% |
| Residue on a 0.09 mm sieve | | 3.5% |

Specific surface according to DIN 66132 (BET): 15 $m^2$/g.

5

TABLE II

| Experiment No. | Total hot air flow at inlet (m³/hr) | Tangential hot air flow (m³/hr) | Ratio tangential/axial (%/%) | Gas velocities | |
|---|---|---|---|---|---|
| | | | | x) Axial (m/s) | xx) Tangential (m/s) |
| 3.111 | 12160 | 3890 | 32/68 | 32.5 | 12.0 |
| 3.112 | 12160 | 3890 | 32/68 | 32.5 | 12.0 |
| 3.113 | 12160 | 3890 | 32/68 | 32.5 | 12.0 |
| 3.121 | 10450 | 3760 | 36/64 | 26.3 | 11.6 |
| 3.122 | 10450 | 3760 | 36/64 | 26.3 | 11.6 |
| 3.123 | 10450 | 3760 | 36/64 | 26.3 | 11.6 |
| 3.124 | 10450 | 3760 | 36/64 | 26.3 | 11.6 |
| 3.151 | 11070 | 3825 | 35/65 | 28.5 | 11.8 |
| 3.152 | 11070 | 3825 | 35/65 | 28.5 | 11.8 |
| 3.153 | 11070 | 3825 | 35/65 | 28.5 | 11.8 |
| 3.154 | 11070 | 3825 | 35/65 | 28.5 | 11.8 |
| 3.161 | 11250 | 3780 | 34/66 | 29.4 | 11.7 |
| 3.162 | 11250 | 3780 | 34/66 | 29.4 | 11.7 |
| 3.163 | 11250 | 3780 | 34/66 | 29.4 | 11.7 |
| 3.164 | 11250 | 3780 | 34/66 | 29.4 | 11.7 |
| 3.165 | 11250 | 3780 | 34/66 | 29.4 | 11.7 |

x) At the bottom of the reaction chamber (the axial gas velocity in the middle of the reaction chamber was in all cases about 4—4.5 m/s).

xx) Close to the cylindrical wall of the chamber.

TABLE II (contd.)

| Experiment No. | Solids re-circulation flow (Kg/hr) | Slurry feed rate kg/hr | $Ca(OH)_2$ feed kg/hr | Hot air temperature at inlet (°C) |
|---|---|---|---|---|
| 3.111 | 2700 | 400 | 46.5 | 137 |
| 3.112 | 2700 | 384 | 45.0 | 142 |
| 3.113 | 2700 | 384 | 45.0 | 141 |
| 3.121 | 2700 | 380 | 44.5 | 142 |
| 3.122 | 2700 | 380 | 44.5 | 138 |
| 3.123 | 2700 | 380 | 44.5 | 138 |
| 3.124 | 2700 | 385 | 45.0 | 141 |
| 3.151 | 3360 | 390 | 51.5 | 146 |
| 3.152 | 3360 | 385 | 51.0 | 141.5 |
| 3.153 | 3360 | 366 | 48.5 | 140 |
| 3.154 | 3360 | 370 | 49.5 | 141 |
| 3.161 | 3360 | 375 | 49.5 | 144 |
| 3.162 | 3360 | 370 | 49.0 | 138 |
| 3.163 | 3360 | 385 | 50.5 | 142 |
| 3.164 | 3360 | 380 | 50.0 | 143 |
| 3.165 | 3360 | 385 | 50.5 | 140 |

# 0 139 352

TABLE II (contd.)

| Experiment No. | SO$_2$ Concentration (corrected) | | | Reaction chamber exit gas | | SO$_2$ Removal efficiency | |
|---|---|---|---|---|---|---|---|
| | Inlet (ppm) | Reaction chamber exit (ppm) | Bag filter exit (ppm) | Temp. (°C) | Dew point (°C) | Reaction chamber (%) | Total (%) |
| 3.111 | 1520 | 650 | — | 50 | 45 | 64 | — |
| 3.112 | 1520 | 800 | — | 53 | 45 | 56 | — |
| 3.113 | 1340 | 430 | — | 50 | 45.5 | 73 | — |
| 3.121 | 1630 | 525 | 250 | 50 | 45.5 | 69 | 85 |
| 3.122 | 1370 | 315 | 75 | 49 | 46 | 77 | 94 |
| 3.123 | 1570 | 270 | 50 | 49 | 45.5 | 82 | 97 |
| 3.124 | 1820 | 390 | 150 | 50 | 45.5 | 79 | 92 |
| 3.151 | 1680 | 460 | 150 | 53 | 45 | 72 | 91 |
| 3.152 | 1585 | 310 | 250 | 50 | 45.5 | 81 | 85 |
| 3.153 | 1530 | 445 | 200 | 52 | 45 | 71 | 87 |
| 3.154 | 1390 | 280 | — | 51 | 45.5 | 80 | — |
| 3.161 | 1690 | 580 | — | 54 | 45 | 65 | — |
| 3.162 | 1540 | 350 | 250 | 50.5 | 45.5 | 77 | 85 |
| 3.163 | 1500 | 295 | 100 | 50.5 | 45.5 | 80 | 93 |
| 3.164 | 1565 | 410 | 100 | 52 | 45.5 | 74 | 94 |
| 3.165 | 1420 | 250 | — | 50 | 45.5 | 83 | — |

## Claims

1. A semi-dry method of removing an acid gas from hot flue gas, wherein an absorption agent and liquid water are introduced and dispersed in a stream of the hot flue gas in a reaction zone in a tubular reaction chamber (1) having a central vertical axis, whereby the acid gas is absorbed by and reacts with the absorption agent in the presence of evaporating liquid water to produce a dry powder comprising reaction products and unreacted absorption agent suspended in the flue gas, whereafter the powder is separated from the flue gas in a separate separating zone (7), characterized by introducing, dispersing and suspending the absorption agent and the water in a rising swirling stream of the hot flue gas at the lower part of the reaction zone, introducing at least a part of the hot flue gas axially at the bottom of the reaction zone as a stream which is subjected to a rapid reduction in axial velocity at the lower part of the reaction zone; the swirling flow of the hot flue gas being provided by bringing the gas into rotation before it is introduced axially into the reaction zone, or by introducing a second stream of the hot flue gas tangentially at one or several positions at the lower part of the reaction zone; and removing the resulting dry powder from the upper part of the reaction zone suspended in and entrained by the flue gas.

2. A method according to claim 1, characterized in that the axial velocity of the axially introduced stream of hot flue gas is within the range of 10—60 m/sec, that the axial velocity of the rising swirling stream of hot flue gas in the middle of the reaction zone is within the range 2—20 m/sec, and that the rapid reduction in axial velocity at the lower part of the reaction zone corresponds to a velocity ratio $v_{initial}/v_{reduced}$ within the range 3—20.

3. A method according to claim 2, wherein the axial velocity of the introduced stream of hot flue gas is within the range of 25—45 m/sec.

4. A method according to claim 2 or claim 3, wherein the axial velocity of the rising swirling stream of hot flue gas is within the range of 3—6 m/secs.

5. A method according to any of claims 2 to 4, wherein the velocity ratio $v_{initial}/v_{reduced}$ is within the range 4—9.

6. A method according to any of the preceding claims, characterized in that the rapid reduction in axial velocity takes place during a period of time within the range 0.05—0.2 times the gas retention time in the reaction zone.

7. A method according to any one of the preceding claims, characterized in that the rapid reduction in axial velocity is provided by directing the rising axially introduced stream of hot flue gas through a divergent annular frustoconical bottom part (2) of the reaction zone having an apex angle greater than 12°.

8. A method according to claim 7, wherein the apex angle is within the range 12—120°.

9. A method according to claim 8, wherein the apex angle is within the range 40—90°.

7

# 0 139 352

10. A method according to any one of the preceding claims, characterized in that the gas retention time in the reaction zone (1) is within the range 1—5 seconds, and that the material retention time in the reaction chamber is within the range 1—8 minutes.

11. A method according to claim 10, wherein the gas retention time is within the range 2—3 seconds.

12. A method according to claim 10 or claim 11, wherein the material retention time is within the range 3—5 minutes.

13. A method according to any one of the preceding claims, characterized in that a part of the powder precipitated in the separating zone is recirculated to the reaction zone, and that the external powder recirculation rate is equal to 10—70 times the input rate of absorption agent and solid particles present in the hot flue gas; and that the dry powder is subjected to size adjustment before it is recirculated to the reaction zone.

14. A method according to claim 13, wherein the external powder recirculation rate is 15—30 times the absorption agent input rate.

15. A method according to claim 13 or claim 14, characterized in that the dry powder precipitated in the separating zone is subjected to comminution before it is recirculated to the reaction zone.

16. A method according to any one of the preceding claims, characterized in that water is introduced into the reaction zone in an amount corresponding to 50—100% of the amount needed to cool the flue gas to the adiabatic saturation temperature.

17. Apparatus for carrying out the method according to any one of the preceding claims, characterized in comprising a tubular reaction chamber (1) having a central vertical axis, an annular bottom wall (2) which slopes downwardly and inwardly with an apex angle greater than 12°; an inlet (3) for hot flue gas comprising a gas inlet opening arranged centrally in the bottom wall and means in the form of a tangentially arranged gas inlet (5) at the lower part of the chamber, or a swirl chamber (5') below the gas inlet opening at the bottom of the chamber, for giving the flue gas a swirling movement, at least one duct (4) for feeding absorption agent and water into the lower part of the reaction chamber, and a suspension outlet (6) at the top of the reaction chamber connected to a particle precipitator (7) having a powder outlet (9) and a gas outlet (8).

18. Apparatus according to claim 17, wherein the apex angle is within the range 12—120°.

19. Apparatus according to claim 18, wherein the apex angle is within the range 40—90°.

20. Apparatus according to any one of claims 17 to 19, characterized in that the ratio $A_{upper}/A_{lower}$ between the areas of the upper and lower part of the annular bottom wall is within the range 3—20.

21. Apparatus according to claim 20, wherein the ratio $A_{upper}/A_{lower}$ is within the range 4—9.

22. Apparatus according to any one of claims 17 to 21, characterized in that the particle precipitator comprises a coarse separator (7) arranged upstream of a fine separator (7'), the coarse separator being a cyclone (7), and the fine separator being an electrostatic filter or a fabric filter (7'); and in that a powder inlet duct (10) connects the powder outlet (9) with the lower part of the tubular reaction chamber (1).

## Patentansprüche

1. Halbtrocken-Verfahren zum Entfernen eines sauren Gases aus heißem Rauchgas, wobei ein Absorptionsmittel und flüssiges Wasser in einem Strom des heißen Rauchgases in einer Reaktionszone in einer rohrförmigen Reaktionskammer (1) mit einer zentralen vertikalen Achse eingeführt und dispergiert werden, wodurch das saure Gas durch das Absorptionsmittel absorbiert wird und mit diesem reagiert in der Anwesenheit von verdampfendem flüssigen Wasser zur Erzeugung eines trockenen Pulvers mit Reaktionsprodukten und nicht-reagiertem Absorptionsmittel suspendiert in dem Rauchgas, wonach das Pulver aus dem Rauchgas in einer separaten Abscheiderzone (7) abgeschieden wird, gekennzeichnet durch das Einführen, Dispergieren und Suspendieren des Absorptionsmittels und des Wassers in einem aufsteigenden Wirbelstrom des heißen Rauchgases an dem unteren Teil der Reaktionszone, durch Einführen mindestens eines Teils des heißen Rauchgases axial am Boden der Reaktionszone als ein Strom, der einer schnellen Reduzierung der Axialgeschwindigkeit am unteren Teil der Reaktionszone ausgesetzt wird, wobei der Wirbelstrom des heißen Rauchgases bewirkt wird, indem das Gas in Rotation versetzt wird, bevor es axial in die Reaktionszone eingeführt wird, oder indem ein zweiter Strom des heißen Rauchgases tangential an einer oder mehreren Stellen an dem unteren Teil der Reaktionszone eingeführt wird, und durch Entfernen des sich ergebenden trockenen Pulvers vom oberen Teil der Reaktionszone suspendiert in dem Rauchgas und von diesem mitgenommen.

2. Verfahren nach Anspruch 1, dadurch gekennzeichnet, daß die Axialgeschwindigkeit des axial eingeführten Stroms des heißen Rauchgases im Bereich von 10 bis 60 m/s liegt, daß die Axialgeschwindigkeit des aufsteigenden Wirbelstroms des heißen Rauchgases in der Mitte der Reaktionszone im Bereich von 2 bis 20 m/s liegt und daß die schnelle Reduzierung der Axialgeschwindigkeit am unteren Teil der Reaktionszone einem Geschwindigkeitsverhältnis $v_{anfangs}/v_{reduziert}$ im Bereich von 3 bis 20 entspricht.

3. Verfahren nach Anspruch 2, dadurch gekennzeichnet, daß die Axialgeschwindigkeit des eingeführten Stroms des heißen Rauchgases im Bereich von 25 bis 45 m/s liegt.

4. Verfahren nach Anspruch 2 oder 2, dadurch gekennzeichnet, daß die Axialgeschwindigkeit des aufsteigenden Wirbelstroms des heißen Rauchgases im Bereich von 3 bis 6 m/s liegt.

5. Verfahren nach irgendeinem der Ansprüche 2 bis 4, dadurch gekennzeichnet, daß das Geschwindigkeitsverhältnis $V_{anfangs}/V_{reduziert}$ im Bereich von 4 bis 9 liegt.

6. Verfahren nach irgendeinem der vorhergehenden Ansprüche, dadurch gekennzeichnet, daß die schnelle Reduzierung der Axialgeschwindigkeit während einer Zeitspanne im Bereich des 0,05 bis 0,2-fachen der Gasverweilzeit in der Reaktionszone stattfindet.

7. Verfahren nach irgendeinem der vorhergehenden Ansprüche, dadurch gekennzeichnet, daß die schnelle Reduzierung der Axialgeschwindigkeit bewirkt wird, indem der aufsteigende axial eingeführte Strom des heißen Rauchgases durch einen divergierenden, ringförmigen, kegelstumpfförmigen Bodenteil (2) der Reaktionszone mit einem Scheitelwinkel größer als 12° gerichtet wird.

8. Verfahren nach Anspruch 7, dadurch gekennzeichnet, daß der Scheitelwinkel im Bereich von 12 bis 120° liegt.

9. Verfahren nach Anspruch 8, dadurch gekennzeichnet, daß der Scheitelwinkel im Bereich von 40 bis 90° liegt.

10. Verfahren nach irgendeinem der vorhergehenden Ansprüche, dadurch gekennzeichnet, daß die Gasverweilzeit in der Reaktionszone (1) im Bereich von 1 bis 5 s liegt und daß die Materialverweilzeit in der Reaktionszone im Bereich von 1 bis 8 min liegt.

11. Verfahren nach Anspruch 10, dadurch gekennzeichnet, daß die Gasverweilzeit im Bereich von 2 bis 3 s liegt.

12. Verfahren nach Anspruch 10 oder 11, dadurch gekennzeichnet, daß die Materialverweilzeit im Bereich von 3 bis 5 min liegt.

13. Verfahren nach irgendeinem der vorhergehenden Ansprüche, dadurch gekennzeichnet, daß ein Teil des in der Abscheiderzone abgeschiedenen Pulvers zur Reaktionszone zurückgeführt wird und daß die äußere Pulverrückführungsmenge gleich dem 10- bis 70-fachen der Eingabemenge des Absorptionsmittels und der festen Partikel ist, die in dem heißen Rauchgas vorhanden sind, und daß das trockene Pulver einer Größeneinstellung ausgesetzt wird, bevor es zu der Reaktionszone zurückgeführt wird.

14. Verfahren nach Anspruch 13, dadurch gekennzeichnet, daß die äußere Pulverrückführungsmenge das 15- bis 30-fache der Absorptionsmittelzuführungsmenge ist.

15. Verfahren nach Anspruch 13 oder Anspruch 14, dadurch gekennzeichnet, daß das in der Abscheiderzone abgeschiedene trockene Pulver einer Zerstäubung ausgesetzt wird, bevor es zu der Reaktionszone zurückgeführt wird.

16. Verfahren nach irgendeinem der vorhergehenden Ansprüche, dadurch gekennzeichnet, daß das Wasser in die Reaktionszone in einer Menge eingeführt wird, die 50 bis 100% der Menge entspricht, die zum Kühlen des Rauchgases auf die adiabate Sättigungstemperatur notwendig ist.

17. Vorrichtung zur Durchführung des Verfahrens nach irgendeinem der vorhergehenden Ansprüche, gekennzeichnet durch eine rohrförmige Reaktionskammer (1) mit einer zentralen Vertikalachse und einer ringförmigen Bodenwand (2), die nach unten und nach innen mit einem Scheitelwinkel größer als 12° geneigt ist, einen Einlaß (3) für heißes Rauchgas mit einer Gaseinlaßöffnung, die zentral in der Bodenwand angeordnet ist, und mit Mitteln in der Form eines tangential angeordneten Gaseinlasses (5) an dem unteren Teil der Kammer oder mit einer Wirbelkammer (5') unter der Gaseinlaßöffnung an dem Boden der Kammer, um dem Rauchgas eine wirbelnde Bewegung zu verleihen, durch mindestens eine Leitung (4) Zuführung von Absorptionsmittel und Wasser in den unteren Teil der Reaktionskammer und durch einen Suspensionsauslaß (6) an dem Oberteil der Reaktionskammer, der an einen Partikelabscheider (7) mit einem Pulverauslaß (9) und einem Gasauslaß (8) angeschlossen ist.

18. Vorrichtung nach Anspruch 17, dadurch gekennzeichnet, daß der Scheitelwinkel im Bereich von 12 bis 120° liegt.

19. Vorrichtung nach Anspruch 18, dadurch gekennzeichnet, daß der Scheitelwinkel im Bereich von 40 bis 90° liegt.

20. Vorrichtung nach irgendeinem der Ansprüche 17 bis 19, dadurch gekennzeichnet, daß das Verhältnis $A_{oben}/A_{unten}$ zwischen den Flächen des oberen und des unteren Teils der ringförmigen Bodenwand im Bereich von 3 bis 20 liegt.

21. Vorrichtung nach Anspruch 20, dadurch gekennzeichnet, daß das Verhältnis $A_{oben}/A_{unten}$ im Bereich von 4 bis 9 liegt.

22. Vorrichtung nach irgendeinem der Ansprüche 17 bis 21, gekennzeichnet dadurch, daß der Partikelabscheider einen Grobabscheider (7) aufweist, der stromaufwärts eines Feinabscheiders (7') angeordnet ist, wobei der Grobabscheider ein Zyklon (7) und der Feinabscheider ein elektrostatisches Filter oder ein Gewebefilter (7') ist, und daß eine Pulvereinlaßleitung (10) den Pulverauslaß (9) mit dem unteren Teil der rohrförmigen Reaktionskammer (11) verbindet.

**Revendications**

1. Procédé par voie semi-sèche pour enlever un gaz acide d'un gaz chaud de fumée, selon lequel on introduit et disperse un agent d'absorption et de l'eau liquide dans un courant du gaz chaud de fumée dans une zone de réaction dans une chambre (1) tubulaire de réaction ayant un axe central vertical, de sorte que le gaz acide est absorbé par l'agent d'absorption avec lequel il réagit en présence de l'eau liquide qui s'évapore pour produire une poudre sèche comprenant des produits de réaction et l'agent d'absorption, n-ayant pas réagi, en suspension dans le gaz de fumée, après quoi on sépare la poudre du gaz de fumée, dans une zone (7) distincte de séparation, procédé caractérisé en ce qu'on introduit, disperse et met en suspension l'agent d'absorption et l'eau dans un courant ascendant tourbillonnaire du gaz chaud de fumée à la partie inférieure de la zone de réaction, on introduit au moins une partie du gaz chaud de fumée axialement au bas de la zone de réaction, sous forme d'un courant qui est soumis à une diminution rapide de vitesse axiale à la partie inférieure de la zone de réaction; l'écoulement tourbillonnaire du gaz chaud de fumée étant obtenu par mise en rotation du gaz avant de l'introduire axialement dans la zone de réaction, ou par introduction d'un second courant de gaz chaud de fumée tangentiellement en une ou plusieurs positions à la partie inférieure de la zone de réaction; et l'on enlève de la partie supérieure de la zone de réaction la poudre sèche résultante, qui est en suspension dans, et est entraînée par, le gaz chaud de fumée.

2. Procédé selon la revendication 1, caractérisé en ce que la vitesse axiale du courant axialement introduit du gaz chaud de fumée se situe entre 10 et 60 m/s, en ce que la vitesse axiale du courant ascendant tourbillonnaire de gaz chaud de fumée se situe, au milieu de la zone de réaction, entre 2 et 20 m/s, et en ce que la diminution rapide de vitesse axiale à la partie inférieure de la zone de réaction correspond à un rapport vitesse initiale/vitesse réduite se situant entre 3 et 20.

3. Procédé selon la revendication 2, dans lequel la vitesse axiale du courant du gaz chaud de fumée introduit se situe entre 25 et 45 m/s.

4. Procédé selon la revendication 2 ou la revendication 3, dans lequel la vitesse axiale du courant ascendant tourbillonnaire du gaz chaud de fumée se situe entre 3 et 6 m/s.

5. Procédé selon l'une quelconque des revendications 2 à 4, dans lequel le rapport vitesse initiale/vitesse réduite se situe entre 4 et 9.

6. Procédé selon l'une quelconque des revendications précédentes, caractérisé en ce que la diminution rapide de la vitesse axiale se produit en une période de temps représentant 0,05 à 0,2 fois le temps de retenue du gaz dans la zone de réaction.

7. Procédé selon l'une quelconque des revendications précédentes, caractérisé en ce que la diminution rapide de la vitesse axiale est obtenue en dirigeant le courant ascendant, introduit axialement, de gaz chaud de fumée dans une partie inférieure (2) tronconique annulaire divergente de la zone de réaction, présentant un angle au sommet supérieur à 12°.

8. Procédé selon la revendication 7, dans lequel l'angle au sommet se situe entre 12 et 120°.

9. Procédé selon la revendication 8, dans lequel l'angle au sommet se situe entre 40 et 90°.

10. Procédé selon l'une quelconque des revendications précédentes, caractérisé en ce que le temps de retenue du gaz dans la zone (1) de réaction se situe entre 1 et 5 secondes, et en ce que le temps de retenue de la matière dans la chambre de réaction se situe entre 1 et 8 minutes.

11. Procédé selon la revendication 10, dans lequel le temps de retenue du gaz se situe entre 2 et 3 secondes.

12. Procédé selon la revendication 10 ou la revendication 11, dans lequel le temps de retenue de la matière se situe entre 3 et 5 minutes.

13. Procédé selon l'une quelconque des revendications précédentes, caractérisé en ce qu'on recycle vers la zone de réaction une partie de la poudre précipitée dans la zone de séparation, et en ce que le débit de recyclage externe de la poudre est égal à 10 à 70 fois le débit d'entrée de l'agent d'absorption et des particules solides présentes dans le gaz chaud de fumée; et en ce qu'on soumet la poudre sèche à un ajustement de la taille des particules avant de recycler cette poudre vers la zone de réaction.

14. Procédé selon la revendication 13, caractérisé en ce que le débit de recyclage externe de la poudre représente 15 à 30 fois le débit d'introduction de l'agent d'absorption.

15. Procédé selon la revendication 13 ou la revendication 14, caractérisé en ce qu'on soumet la poudre sèche, précipitée dans la zone de séparation, à fragmentation avant de la recycler vers la zone de réaction.

16. Procédé selon l'une quelconque des revendications précédentes, caractérisé en ce qu'on introduit dans la zone de réaction de l'eau en une quantité correspondant à 50 à 100% de la quantité nécessaire pour refroidir le gaz de fumée jusqu'à la température de saturation adiabatique.

17. Appareillage pour mettre en oeuvre le procédé selon l'une quelconque des revendications précédentes, caractérisé en ce qu'il comprend une chambre (1) tubulaire de réaction ayant un axe central vertical, une paroi (2) inférieure annulaire qui s'incline vers le bas et vers l'intérieur en présentant un angle au sommet supérieur à 12; une admission (3) du gaz chaud de fumée, comprenant un orifice d'admission de gaz placé au centre de la paroi inférieure et un moyen, ayant la forme d'une admission (5) de gaz disposée tangentiellement à la partie inférieure de la chambre, ou une chambre (5') à tourbillon(s) située au-dessous de l'orifice d'admission de gaz au bas de la chambre, pour conférer au gaz de fumée un mouvement tourbillonnaire, au moins un conduit (4) pour alimenter en agent d'absorption et en eau la partie inférieure de la chambre de réaction, et, au sommet de la chambre de réaction, une sortie (6) de la suspension, reliée à un dispositif (7) de précipitation de particules présentant une sortie (9) pour la poudre et une sortie (8) pour le gaz.

18. Appareillage selon la revendication 17, dans lequel l'angle au sommet se situe entre 12 et 120°.

19. Appareillage selon la revendication 18, dans lequel l'angle au sommet se situe entre 40 et 90°.

20. Appareillage selon l'une quelconque des revendications 17 à 19, caractérisé en ce que le rapport A supérieure/A inférieure entre les aires de surface de la partie supérieure et de la partie inférieure de la paroi inférieure annulaire se situe entre 3 et 20.

21. Appareillage selon la revendication 20, dans lequel le rapport A supérieure/A inférieure se situe entre 4 et 9.

22. Appareillage selon l'une quelconque des revendications 17 à 21, caractérisé en ce que le dispositif de précipitation des particules comprend un séparateur (7) de particules grossières, monté en amont d'un séparateur (7') des fines, le séparateur des particules grossières étant un cyclone (7), et le séparateur des fines étant un filtre électrostatique ou un filtre (7') à étoffe(s); et en ce qu'un conduit (10) d'admission de poudre relie la sortie (9) de la poudre à la partie inférieure de la chambre (1) tubulaire de réaction.

Fig.1

Fig.2